# EUROPEAN PATENT APPLICATION

(11) **EP 2 015 522 A1**
(43) Date of publication of application: **14.01.2009**
(21) Application number: 07013722.9
(22) Date of filing: 12.07.2007
(51) Int. Cl.: H04L 12/56, H04L 12/28

(54) **A method of preventing light load penalty in an ethernet passive optical network and an optical network unit using the same**

(71) Applicant: Nokia Siemens Networks Oy, 02610 Espoo (FI)
(72) Inventor: Hajduczenia, Marek, 4505-314 Fiaes (PT); Monteiro, Paulo, 3930-209 Ilhavo (PT); Silva, Henrique, Prof., 3030-076 Coimbra (PT)
(74) Representative: Bruglachner, Thomas E.

(57) **Abstract**

The invention relates to a method of upstream data transmission in an Ethernet Passive Optical Network (EPON) which is capable of preventing Light Load Penalty (LLP) and an Optical Network Unit (ONU) using the same. The method comprises requesting a first upstream time-slot having a size corresponding to a sum of a first entire data size of a first number of packets stored in a first queue having a high priority and of a second entire data size of a second number of packets stored in the second queue having a low priority. The first number and the second number will be stored for later use during the first upstream time-slot when a number of packets stored in the first queue corresponding to the first number is sent upstream and a number of packets stored in the second queue corresponding to the second number is sent upstream.

## Description

### Background of the Invention

### Field of the Invention

The invention relates to a method of upstream data transmission in an Ethernet Passive Optical Network (EPON) which is capable of preventing Light Load Penalty (LLP) and an Optical Network Unit (ONU) using the same.

### Description of Related Art

An Ethernet Passive Optical Network system may provide support for differentiated traffic classes wherein each class has a different degree of importance ("priority") assigned to it. In order to assure a higher quality of service (reliability, a guaranteed minimum throughput even under high load etc.) to traffic classes having a higher priority, pre-emptive packet scheduling is applied in an Optical Network Unit forming part of the EPON. If pre-emptive scheduling is applied, packets of each traffic class are received and attached to a corresponding queue for the traffic class. When sending the packets upstream, arbitration based on the priority of each queue is performed. Thus, packets belonging to traffic classes of lower priority will have to make way for packets of higher priority if the (upload) bandwidth assigned to the ONU cannot accommodate for all packets of all traffic classes at the same time.

Passive Optical Networks apply a Time Division Multiple Access (TDMA) scheme for transmitting upstream data (i.e. data sent from the ONU). This means that upstream bandwidth of the fibre channel is divided among the ONUs by assigning time-slots to each ONU in the network during which always only one of the ONUs may send data while the others have to remain quiet in order to not interfere with the data transmission of the active ONU. Commonly assignation of time-slots will be done by the Optical Line Termination (OLT) in a dynamical way, i.e. each ONU sends a report message (the "REPORT MPCP DU" or report Multi Point Protocol Data Unit) to the OLT which comprises an estimate of the expected required upstream bandwidth during the next transmission cycle. The OLT will then react by sending a response message (the "GATE MPCP DU") assigning a time-slot of the requested size if the requested amount is available to the ONU (the decision whether a time-slot of the requested size or less will be assigned usually depends on technical factors such as the overall bandwidth available at the point in time as well as economic factors such as contractual conditions on the availability and amount of bandwidth for each ONU).

Now, an ONU will generally estimate the required bandwidth based on the number of packets currently present in its queues. Since there is no or only a small degree of correlation between the current load (i.e. the number of packets arriving per time) for each traffic class and the number of packets that will arrive between sending the report message and start of the time-slot assigned in response to the report message, the number of packets present in the ONU's scheduler at the start-time of the time-slot may not be foreseen when requesting bandwidth. Thus, an ONU will typically request a time-slot for only the packets currently present in the scheduler such that bandwidth and hence payload will not be wasted by requesting a larger time-slot than actually required. However, this procedure may lead to a problem called Light Load Penalty (LLP) which occurs in moments of light load and will be set forth below.

When network traffic originating from an ONU is low, the ONU will restrict itself to a lower upstream bandwidth by requesting time-slots of lower size as explained above. If now a packet of higher priority arrives after the ONU has sent the report message, the time-slot assigned to the ONU by the OLT will be too small to accommodate for the packets that had been present in the ONU when requesting the time-slot plus the newly arrived packet. If the newly arrived packet has a higher priority than one or more packets that had arrived earlier, pre-emptive scheduling will lead to leaving one or more low-priority packets behind in favour of the newly arrived high-priority packet. This may happen many times in a row having an effect that a service belonging to a low-priority traffic class may stall (which is the expected and desired operation during times of high load in order to preserve the available bandwidth for high-priority services) even though enough bandwidth would have been available to serve both low-priority and high-priority data traffic.

Another undesirable effect associated with this problem stems from the fact that Ethernet packets differ in size but may not be fragmented for transmission in EPONs. Hence, a time-slot which was assigned with regard to the number and size of packets present at the time of sending the report message will not be fit for a different set of packets with a high probability because there is no strong statistical relation between packet sizes. Consequently, there is a high probability that the packets that are actually going to be sent according to the pre-emptive scheduling mechanism will not sum up to the same size of data as the packets that the time-slot was tailored for leaving an unused remainder of the time-slot, which will not be used for data transmission.

There are two known mechanisms that allow for at least partial elimination of upstream slot remainders and thus for mitigation of the LLP.

The scheduler based LLP mitigation is based on the application of a non-pre-emptive priority packet scheduler in the ONU. In this mode of operation, the ONU can transmit only previously reported packets even if more higher-priority packets arrive after the last report message was sent. Non-pre-emptive queuing is implemented as a two-stage buffer requiring specific and complex queue memory management routines to be implemented in the ONU hardware. A downside of this approach is that non-pre-emptive scheduling increases queuing delay because all packets will always have to wait a full cycle between being reported and being transmitted. The increased delay can become a problem when time-critical packets are delayed beyond their tolerance values. High-priority data packets conveying system critical information such as system alarms, failure indication etc. may arrive at the destination point suffering from extended delay in the ONU. This is especially important in the case of real-time voice transmission. ITU-T Recommendation G.114 "One-way Transmission Time" specifies 1.5 ms one-way propagation delay in the access network and consequently the polling cycle time for the EPON using non-pre-emptive scheduling would have to be reduced to 750 ns or less. This in turn significantly increases guard band and scheduling overheads and therefore again reduces channel utilisation.

The second approach which eliminates LLP as a side-effect is known from EP1786149 A1 by the same inventors and is based on extended MPCP DUs called "eREPORT" and "eGATE" MPCP DUs. However, application of this requires that both the ONU and the OLT are adapted to deal with the extended MPCP DUs which entails modified hardware.

### Summary of the Invention

The invention has been made in an effort to provide a method of upstream data transmission in an Ethernet Passive Optical Network which is capable of preventing Light Load Penalty and of thereby maximising utilisation of time-slots assigned to an Optical Network Unit. The invention has further been made to provide an Optical Network Unit that uses the method of upstream data transmission preventing Light Load Penalty.

Therefore, a first aspect of the invention provides a method of upstream data transmission in an Ethernet Passive Optical Network (EPON). The method comprises:
receiving a first plurality of upstream data packets having a high priority;
storing the first plurality of upstream data packets in a first queue;
receiving a second plurality of upstream data packets having a low priority;
storing the second plurality of upstream data packets in a second queue;
requesting a first upstream time-slot having a size corresponding to a sum of a first entire data size of a first number of packets stored in the first queue and of a second entire data size of a second number of packets stored in the second queue;
storing the first number and the second number;
getting assigned the first upstream time-slot;
during the first upstream time-slot, reading the first number and sending a number of packets stored in the first queue corresponding to the first number upstream; and
also during the first upstream time-slot, reading the second number and sending a number of packets stored in the second queue corresponding to the second number upstream.

The LLP problem is mitigated by snapshotting the queue states of the first and second queues at the moment when the request message is sent to the OLT. When the response message is received by the ONU, the ONU reads the stored snapshot (i.e. the number of packets present in each queue) and thereby may determine in a straight forward way how many packets of each queue should be sent during the time-slot in order to make optimal use of the time-slot. Thus, a pre-emptive scheduler can be modified easily to not suffer from LLP in times of low network load. The solution provided by the first aspect of the invention does not need to use complex memory management routines as the two-stage buffer approach which also suffers from generally increased queuing delays as set forth above.

The method may further comprise after storing the first number and the second number and before getting assigned the first upstream time-slot:
receiving a third plurality of upstream data packets having the high priority;
storing the third plurality of upstream data packets in the first queue;
receiving a fourth plurality of upstream data packets having the low priority; and
storing the fourth plurality of upstream data packets in the second queue.

Thus, after sending the request message and while waiting for the response message more packages may be received from the subnet connected to the ONU.

The method may further comprise during the time-slot:
after sending the first number of packets from the first queue, keeping the third plurality of upstream data packets in the first queue; and
after sending the second number of packets from the second queue, keeping the fourth plurality of upstream data packets in the second queue.

Thus, when LLP mitigation is active, pre-emptive scheduling is not performed. Since LLP only occurs under light load conditions, the circumvention of pre-emptive scheduling is not a problem because the ONU will be able to send the high-priority packets during the next time-slot.

Preferably, when the size of the assigned first upstream time-slot is smaller than the sum of the first entire data size and of the second entire data size, a third number of upstream data packets having a third entire data size being lower than or equal to the size of the assigned first upstream time-slot is sent upstream during the time-slot. The third number is less than a sum of the first number and of the second number.

Thus, if the time-slot assigned to the ONU is not large enough to accommodate for all packages that had been present in the first and second queue when sending the request message, less packages are sent.

In a preferred embodiment of the method, the third number of upstream data packets are upstream data packets having the high priority on condition that the third number is less than or equal to the first number.

Consequently, packets of high priority are preferred over packets of low priority when not all packets may be sent upstream.

The third number of upstream data packets may comprise the first number of upstream data packets on condition that the size of the assigned first upstream time-slot is greater than or equal to the first entire data size.

If the time-slot is large enough to allow transmission of all packets that had been present in the first queue when sending the request message but not large enough to allow transmission of all packets that had been present in the first and second queue, the packets of the first queue will be sent. A remainder of the time-slot may be used for sending as many packets from the second queue as possible.

Since LLP is a problem only at light load conditions, pre-emptive packet scheduling should be enabled at high load conditions. The ONU has a notion of the load simply by regarding the number of packages present in the queues and/or the data size of the packets. Alternatively or in addition, the ONU may refer to an increase of numbers of packages and/or their data size over a predetermined number of preceding time-slots.

A second aspect of the invention provides an Optical Network Unit. The Optical Network Unit comprises a controller, an upstream sender, an upstream receiver, a downstream receiver and a memory. The upstream sender, the upstream receiver, the downstream receiver and the memory are connected to the controller. The upstream sender is adapted to receive data packets from the controller and to send the data packets upstream. The upstream sender is further adapted to receive request messages from the controller and to send the request messages upstream. The upstream receiver is adapted to receive response messages and to transmit the response messages to the controller. The downstream receiver is adapted to receive data packets and to transmit the data packets to the controller and the memory comprises a first packet queue, a second packet queue, a first storage cell and a second storage cell. The controller is adapted to carry out the different embodiments of the method according to the first aspect of the invention.

### Brief Description of the Drawings

A more complete appreciation of the present invention and many of the attendant advantages thereof, will be readily apparent as the present invention becomes better understood by reference to the following detailed description when considered in conjunction with the accompanying drawings, wherein:
FIG. 1 is an illustration of the Light Load Penalty problem (corresponds to Fig. 1 of the invention report);
FIG. 2 is an operation example under light to moderate load (Fig. 4 of the invention report);
FIG. 3 is an operation example under heavy load (Fig. 5 of the invention report); and
FIG. 4 is a detailed flowchart for the Light Load Penalty Prevention Mechanism (Fig. 3 of the invention report).

### Detailed Description of the Invention

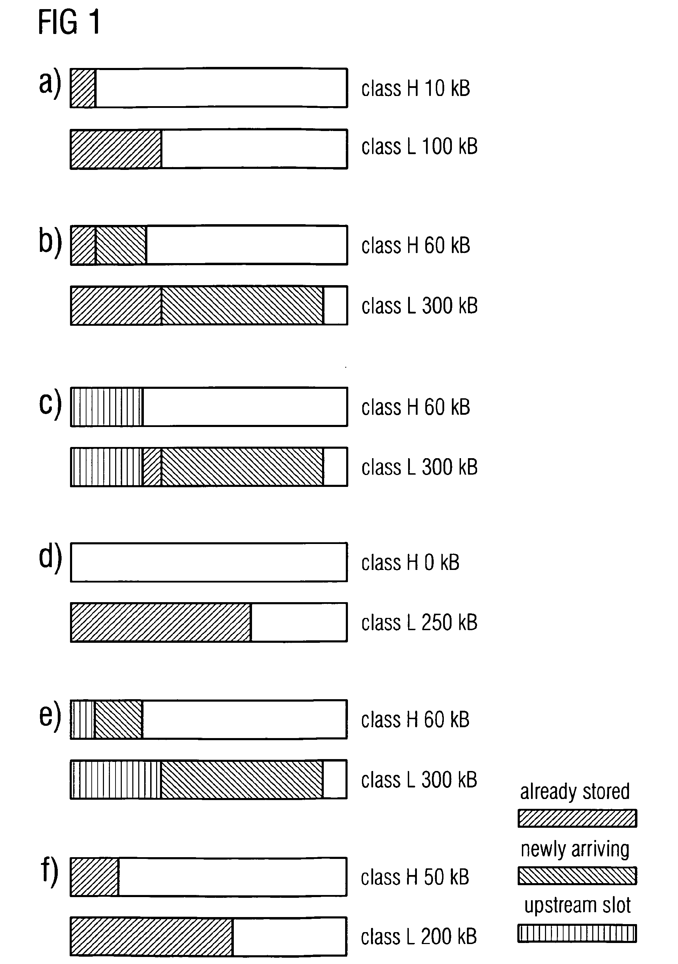

FIG. 1 shows an illustration of the Light Load Penalty problem. In order to visualise the LLP problem, an n^{th} polling cycle for an ONU with two priority queues ("class H" and "class L" for high- and low-priority queues, respectively) will be considered. Of course, the invention is not limited to ONUs with just two priority queues and the following may be easily extended for any number of queues. The high priority queue has 10kB of data while the lower priority queue has 100 kB in total stored (FIG. 1a). The ONU under consideration creates a REPORT MPCP DU message (a request message) indicating 110 kB of total data buffered. The central scheduler in the OLT grants the upstream transmission slot satisfying the whole requested bandwidth demand since the LLP typically occurs when the overall network load is light. During the (n+1)^{th} polling cycle (between creation of the REPORT MPCP DU and start of the granted upstream transmission slot), more data packets arrive at the given ONU, in the example additional 50 kB of high priority data along with some 200 kB of lower priority data (FIG. 1b). Now, the ONU will have 60 kB of high priority data along with 300 kB of lower priority data buffered and waiting for transmission. Once the GRANT MPCP DU (the response message) arrives, it contains information on the upstream transmission slot which will have a size of 110 kB to accommodate for the reported 10 kB of high-priority and 100 kB of low-priority data. Providing that standard intra-ONU packet scheduling is carried out, the allocated 110 kB of bandwidth will be distributed as follows: 60 kB will be used to deliver upstream high priority data stored in the buffer at the beginning of the slot, the remaining 50 kB will be used to provide service to the low-priority traffic class (FIG. 1c). In this way, once the transmission event is complete, the high-priority queue should be depleted while the low priority queue will store excessive packets which should have been delivered upstream (50 kB of them in this case, see FIG. 1d). This effect is even further aggravated by the arrival of new data packets to the ONU during the upstream transmission slot when new high-priority packets are delivered instantly while low priority ones are queued for later transmission. A targeted and correct operation of the packet scheduling mechanism is depicted in FIGS. 1e and 1f presenting the upstream transmission time-slot allocations for each individual traffic class and the queue state after transmission, respectively. In this way, the slot remainder will be minimised because only previously reported packets are delivered during the upstream time-slot.

The Light Load Penalty generally results in lower priority packets being delayed for several cycles before actual upstream transmission occurs. It is also a general observation that the lower the priority of a given packet, the more it is likely to suffer from Light Load Penalty. An additional side-effect of such scheduler operation is the packet delineation problem because the packet delineation bounds change when unscheduled packets occupy the time-slot allocated for a different packet size population reported to and scheduled by the OLT. Since Ethernet packets may not be fragmented according to IEEE 802.3, packet pre-emption results in an unused slot remainder unless higher-priority packets have the same total size as pre-empted lower-priority packets which is statistically possible but with only low probability.

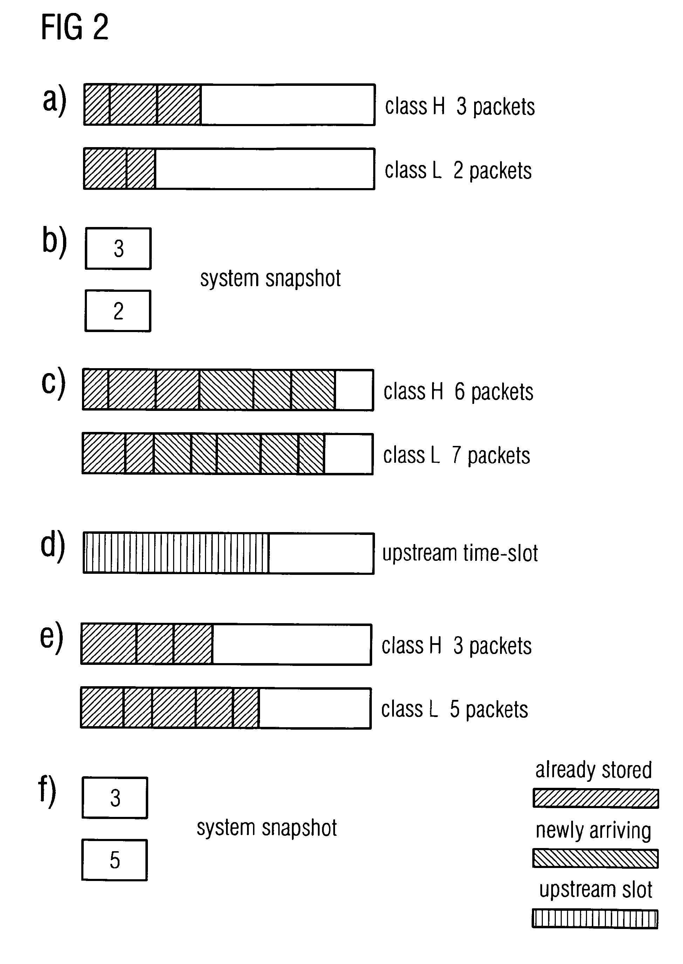

FIG. 2 depicts a detailed exampled of the Light Load Penalty Prevention Mechanism in an EPON system with the two packet queues "class H" and "class L". At a certain moment of time, the said packet queues hold three and two packets, respectively (FIG. 2a) which are then reported to the central OLT packet scheduler while the ONU takes a system snapshot (FIG. 2b) of the number of reported packets. Next, while the ONU waits for the arrival of the upstream transmission time-slot, more packets arrive to each of the queues (three and five to the high- and low-priority ones, respectively, FIG. 2c). In strict priority scheduling, the arriving upstream transmission time-slot (FIG. 2d) would be consumed by the high-priority packets leaving the low-priority queue starving and producing an unused slot remainder due to improper packet delineation and varying size distribution. However, since a system snapshot was taken during the last produced REPORT MPCP DU, the ONU knows that the requested bandwidth can be assigned to meet the demand composed of three high- and two low-priority packets and thus only those shall be transmitted upstream during the given time-slot. This will leave the three and five packets in the high- and low-priority queues, respectively (FIG. 2e), which arrived after the snapshot was taken. These packets will then be incorporated in the next system snapshot (FIG. 2f) and the operation cycle repeats itself.

However, assuming that the requested upstream transmission time-slot exceeds the maximum grantable slot size, the ONU recognises that the granted upstream transmission time-slot is smaller than the requested one and thus LLPPM will be disabled for the time being. This feature prevents the excessive packet delay observed with LLPPM enabled for high network load (close to and exceeding network saturation points) which should typically be avoided through careful network planning and bandwidth allocation but might occur under catastrophic overflow events / flood attacks.

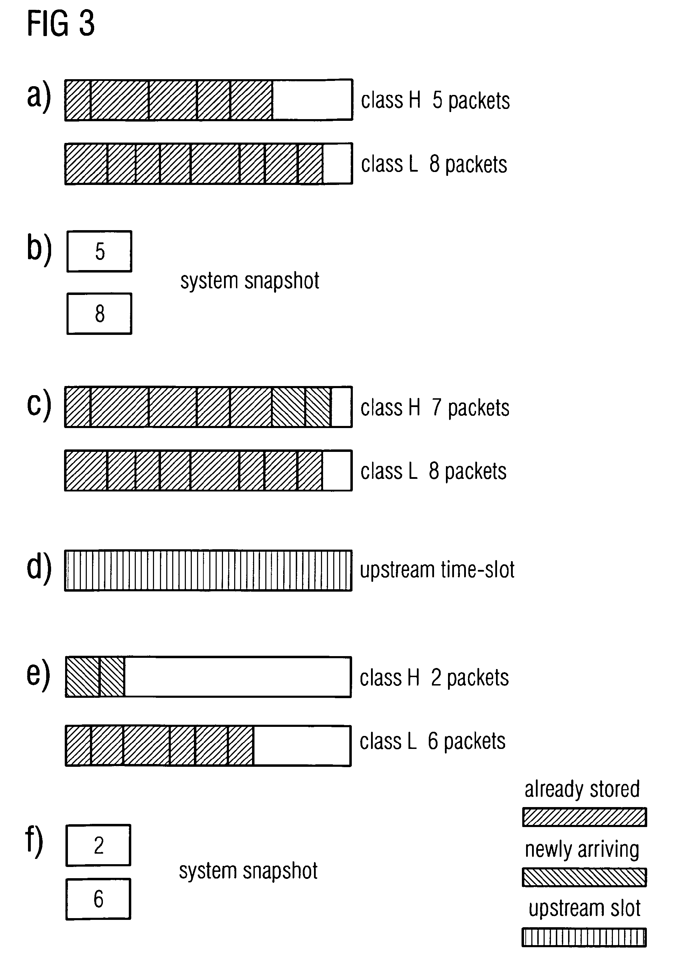

Accordingly, FIG. 3 illustrates operation under conditions of high load when LLPPM cannot reduce the slot remainder any more since the required upstream transmission time-slot would exceed the maximum size of a time-slot (FIG. 3d). The time-slot will be used to deliver high-priority packets first (five in the example, FIG. 3e) while only a fraction of the reported low-priority packets will fit into the slot remainder. Additionally, since the slot-size was assigned in an arbitrary manner in this case (i.e. regardless of the actual excessive bandwidth demand), a slot remainder will be produced. There is no way to control the size of this slot remainder because this will depend on the packet size distribution in the lower priority queues.

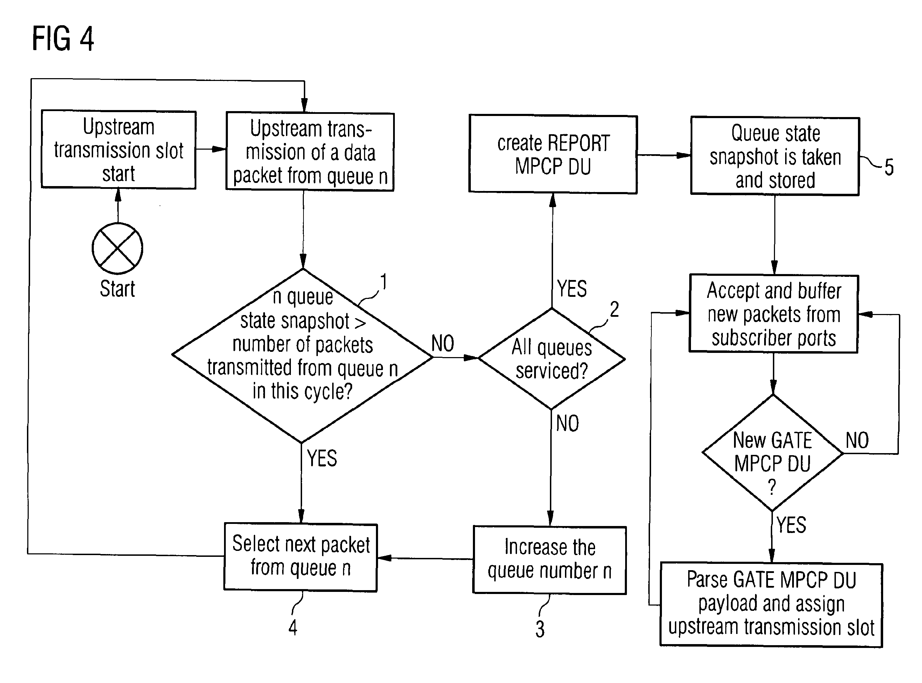

FIG. 4 depicts a flow chart of an exemplary embodiment of the LLPPM scheme implemented in an ONU according to the second aspect of the invention. Blocks 1, 2, 3, 4, and 5 are new elements in the scheme while the remaining blocks represent currently existing elements of the data flow.

Block 1: this block is responsible for a single straightforward boolean operation. Assuming that a queue state snapshot is available for the given upstream time-slot under transmission, this block is responsible for the following set of operations:
read the queue n state snapshot (number of packets present in queue n upon creation of the last REPORT MPCP DU)
read the current number of packets transmitted from packet queue n
compare the queue n state snapshot and the current number of packets using an inequality operator producing boolean value true if the number of currently transmitted packets is smaller than the queue n state snapshot and false otherwise

The functionality of block 1 can be easily implemented as long as it has access to the current queue state snapshot (e.g. a dynamic array storing the number of packets present in each packet queue upon creation of the request message) and can count and store the number of packets transmitted from queue n.

Blocks 2 and 3: once block 1 returns false, the given packet queue n has been depleted (all previously reported packets have already been delivered upstream) and thus it will be checked whether other queues are still keeping packets that had already been present upon creation of the request message. The boolean block 2 again performs a straightforward operation:
read the number of serviced queues
read the total number of queues included in the system snapshot
if the number of serviced queues is smaller than the total number of queues included in the system snapshot, there is still at least one queue pending for service, thus increase the current queue number and provide service using block 1. Otherwise advance to block 3 and increase the number of the current queue (the queue being processed).

Block 4 modifies the basic functionality of the packet selection mechanism in the ONU. Typically, various flavours of strict priority queueing mechanisms are employed meaning that the given queue is serviced as long as there are packets pending transmission and higher priority queues receive more bandwidth than lower priority ones. LLPPM modifies the strict priority packet scheduling by feeding the packet selection mechanism with the queue number so that the function under consideration selects a packet from a pre-defined queue instead of searching through the available queues for the highest-priority packet pending transmission.

Once a packet is selected, it is relayed to the upstream transmission function which transmits the packet upstream.

Block 5 extends the standard data flow within the ONU module. During creation of the REPORT MPCP DU, the standard packet scheduling mechanisms employed in the ONU estimate only the bandwidth amount required for transmission of the data frames present in the given queue including transmission overhead required for proper transmission of individual packets. During the REPORT MPCP DU creation process, the given queue must be therefore browsed and examined in detail to evaluate its current bandwidth demand. This process can be extended in a straightforward manner. The standard reporting mechanism can be left intact thus carrying out its standard task. Additionally, the number of individual data packets reported for the given queue will be recorded at the end of the process in a queue snapshot data field which stores the number of packets reported in the queue at the end of the operation phase of the reporting mechanism in the ONU.

## Claims

1. A method of upstream data transmission in an Ethernet Passive Optical Network (EPON), the method comprising:
receiving a first plurality of upstream data packets having a high priority;
storing the first plurality of upstream data packets in a first queue;
receiving a second plurality of upstream data packets having a low priority;
storing the second plurality of upstream data packets in a second queue;
requesting a first upstream time-slot having a size corresponding to a sum of a first entire data size of a first number of packets stored in the first queue and of a second entire data size of a second number of packets stored in the second queue;
storing the first number and the second number;
getting assigned the first upstream time-slot;
during the first upstream time-slot, reading the first number and sending a number of packets stored in the first queue corresponding to the first number upstream; and
also during the first upstream time-slot, reading the second number and sending a number of packets stored in the second queue corresponding to the second number upstream.

2. The method of claim 1, further comprising after storing the first number and the second number and before getting assigned the first upstream time-slot:
receiving a third plurality of upstream data packets having the high priority;
storing the third plurality of upstream data packets in the first queue;
receiving a fourth plurality of upstream data packets having the low priority; and
storing the fourth plurality of upstream data packets in the second queue.

3. The method of claim 2, further comprising during the time-slot:
after sending the first number of packets from the first queue, keeping the third plurality of upstream data packets in the first queue; and
after sending the second number of packets from the second queue, keeping the fourth plurality of upstream data packets in the second queue.

4. The method of one of the preceding claims, wherein during the first upstream time-slot, when the size of the assigned first upstream time-slot is smaller than the sum of the first entire data size and of the second entire data size, a third number of upstream data packets having a third entire data size being lower than or equal to the size of the assigned first upstream time-slot is sent upstream, the third number being less than a sum of the first number and of the second number.

5. The method of claim 4, wherein the third number of upstream data packets are upstream data packets having the high priority on condition that the third number is less than or equal to the first number.

6. The method of one of claims 4 or 5, wherein the third number of upstream data packets comprises the first number of upstream data packets on condition that the size of the assigned first upstream time-slot is greater than or equal to the first entire data size.

7. The method of one of the claims 4 through 6, wherein pre-emptive packet scheduling is used during high load conditions or during medium and high load conditions.

8. An Optical Network Unit comprising:
a controller;
an upstream sender connected to the controller and adapted to receive data packets from the controller and to send the data packets upstream, the upstream sender further being adapted to receive request messages from the controller and to send the request messages upstream;
an upstream receiver connected to the controller and adapted to receive response messages and to transmit the response messages to the controller;
a downstream receiver connected to the controller and adapted to receive data packets and to transmit the data packets to the controller; and
a memory connected to the controller, the memory comprising a first packet queue, a second packet queue, a first storage cell and a second storage cell;
wherein the controller is adapted to:
receive a first plurality of upstream data packets having a low priority;
store the first plurality of upstream data packets in the first queue;
receive a second plurality of upstream data packets having a low priority;
store the second plurality of upstream data packets in a second queue;
send a request message requesting a first upstream time-slot having a size corresponding to a sum of a first entire data size of a first number of packets stored in the first queue and of a second entire data size of a second number of packets stored in the second queue;
store the first number in the first storage cell and the second number in the second storage cell;
receive a response message comprising an information about a start time of the first upstream time-slot and an information about a size of the first upstream time-slot;
during the first upstream time-slot, read the first number from the first storage cell and send a number of packets stored in the first queue corresponding to the first number upstream; and
also during the first upstream time-slot, read the second number from the second storage cell and send a number of packets stored in the second queue corresponding to the second number upstream.

9. The Optical Network Unit of claim 8, wherein the controller is further adapted to after storing the first number and the second number and before receiving the response message:
receive a third plurality of upstream data packets having the high priority;
store the third plurality of upstream data packets in the first queue;
receive a fourth plurality of upstream data packets having the low priority; and
store the fourth plurality of upstream data packets in the second queue.

10. The Optical Network Unit of claim 9, wherein the controller is further adapted to:
during the time-slot and after sending the first number of packets from the first queue, keep the third plurality of upstream data packets in the first queue; and
during the time-slot and after sending the second number of packets from the second queue, keep the fourth plurality of upstream data packets in the second queue.

11. The Optical Network Unit of one of the claims 8 through 10, wherein the controller is further adapted to:
during the first upstream time-slot, when the size of the assigned first upstream time-slot is smaller than the sum of the first entire data size and of the second entire data size, send a third number of upstream data packets having a third entire data size being lower than or equal to the size of the assigned first upstream time-slot upstream, the third number being less than a sum of the first number and of the second number.

12. The Optical Network Unit of claim 11, wherein the third number of upstream data packets are upstream data packets having the high priority on condition that the third number is less than or equal to the first number.

13. The Optical Network Unit of one of claims 11 or 12, wherein the third number of upstream data packets comprises the first number of upstream data packets on condition that the size of the assigned first upstream time-slot is greater than or equal to the first entire data size.

14. The Optical Network Unit of one of the claims 11 through 13, wherein pre-emptive packet scheduling is used during high load conditions or during medium and high load conditions.
